Europäisches Patentamt

European Patent Office

Office européen des brevets

(19)

(11) Publication number: **0 266 539 B1**

## EUROPEAN PATENT SPECIFICATION

(12)

(45) Date of publication of patent specification: **16.06.93**

(51) Int. Cl.⁵: **G01B 9/02**, G01B 11/16, G01D 5/26

(21) Application number: **87114049.7**

(22) Date of filing: **25.09.87**

(54) **Surface interferometer.**

(30) Priority: **07.11.86 US 928496**

(43) Date of publication of application:
**11.05.88 Bulletin 88/19**

(45) Publication of the grant of the patent:
**16.06.93 Bulletin 93/24**

(84) Designated Contracting States:
**DE FR GB IT**

(56) References cited:
**EP-A- 0 021 148**
**EP-A- 0 085 875**
**DE-A- 2 304 714**
**US-A- 3 788 746**
**US-A- 4 512 661**

(73) Proprietor: **International Business Machines Corporation**
**Old Orchard Road**
**Armonk, N.Y. 10504(US)**

(72) Inventor: **Northrop, Gregory Allen**
**53 Carey Street**
**Mahopac New York 10541(US)**

(74) Representative: **Jost, Ottokarl, Dipl.-Ing.**
**IBM Deutschland Informationssysteme**
**GmbH Patentwesen und Urheberrecht**
**Pascalstrasse 100**
**W-7000 Stuttgart 80 (DE)**

**Description**

The invention refers to an interferometric surface tester which uses optical information from different optical path lengths to provide information on the condition of the surface of an object.

The use of interferometer type apparatus to measure small dimensions has been employed in the art. One type of these devices has come to be known as a dilatometer. Such devices generally employ reflective members that change length and/or direction of a plurality of light beams emanating from a common source, so that dimensional information can be correlated with frequency shifts in the beams in relation to each other. One such dilatometer is shown in U.S. Patent 3,788,746 wherein the corners of a prism are used together with reflections from the front and back surfaces of the prism.

Simplicity in these devices is an advantage. In some constructions, component simplicity has been achieved by using separate optical components. Such a construction is shown in U.S. Patent 4,142,797 wherein both surfaces of a plate is used for beam separation in one component and, in another component, reflection from two surfaces meeting at an angle, known as a roof mirror, is used for beam direction change.

Sensitivity is another desirable feature. Sensitivity has been achieved by angular adjustment of the components. Such a structure is illustrated in a device known as Jamin's interferometer described in Optical Interferometer, by M. Francone, (Academic Press, 1966), page 99. This device employs a light path that is reflected from both the front and the back surfaces of two relatively parallel angularly mounted reflecting mirrors. The sensitivity is achieved by angular adjustment that moves the mirrors out of parallel.

The invention as claimed is an interferometric surface tester for indicating surface conditions of a workpiece, providing improved insensitivity to vibration noise and to uniform motion of the workpiece surface. In accordance with the invention as claimed, a beam of coherent light is split into three parallel beams by reflection from the front and back surfaces of a parallel faced reflecting member, the three parallel beams are then reflected from the surface of a workpiece and the three parallel beams reflected from the workpiece are combined by reflection from the front and back surfaces of a parallel faced reflecting member finally being directed to a separate sensor for each beam. The condition of the surface, such as reflectivity, displacement, rotation and bending, is measured by phase difference between the center and each of the outer beams.

FIG. 1 is a schematic illustration showing the relative locations and types of the elements and light path directions, in the surface interferometer of the invention.

FIG. 2 is a detailed illustration of the light paths in one structural arrangement of the invention.

FIG. 3 is a schematic illustration of the phase relationship between light beams 6, 7 and 8.

FIGS. 4 and 5 are illustrations of the relationship of signal intensity at sensors 17 and 18 and optical path length differences between beams 6 and 7 and 7 and 8, respectively.

FIG. 6 is a detailed illustration of the light paths in another structural arrangement of the invention.

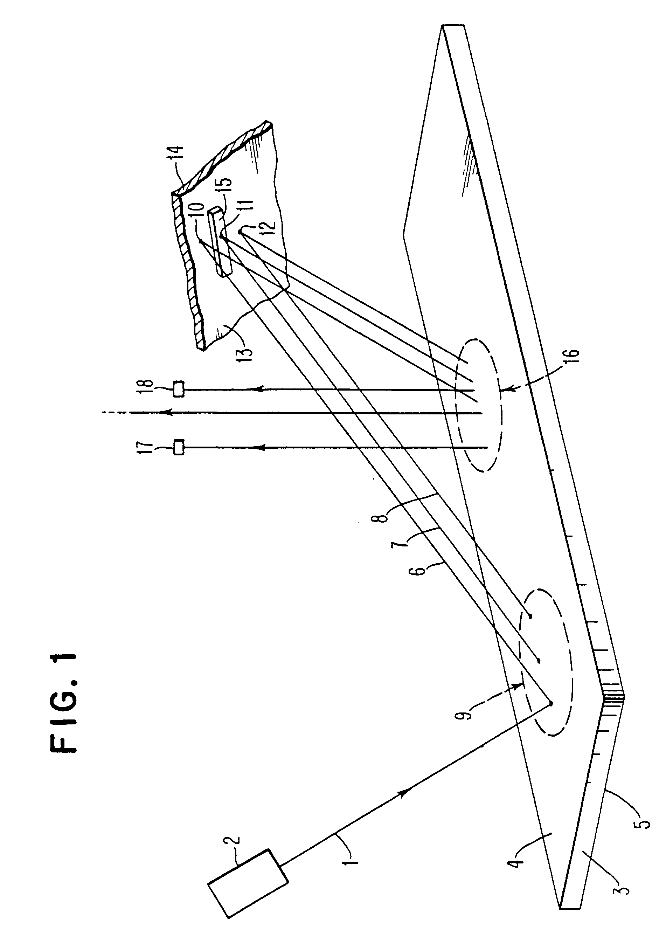

Referring to FIG. 1, a beam of coherent light 1 is supplied from a light source 2, such as a laser. The beam 1 strikes a parallel reflecting surface member 3. The parallel reflecting surface member 3 has a front reflecting surface 4 and a parallel back reflecting surface 5.

The light is split into three parallel beams 6, 7 and 8 by reflection from one or both of the two reflecting surfaces 4 and 5 at a first or splitting location 9. The three parallel beams 6, 7 and 8 then strike adjacent regions 10, 11 and 12 of the surface 13 of a workpiece 14. For purposes of illustration, the surface 13 at the center region 11 has an object 15 thereon having a surface that is displaced from the surface at regions 10 and 12, such as would be the condition with a conductive member on a semiconductor wafer. The three parallel beams after reflection from regions 10, 11 and 12 are further reflected at a second or combining location 16 to sensors 17 and 18. At location 16, by reflection from both of the two reflecting surfaces 4 and 5 of the member 3, the difference in optical path length between locations 9 and 16 caused by the presence of element 15 on the surface 13 is caused by beam combination to produce interference as sensed at sensor 17 between the center beam 7 and beam 6. A similar combination of beams 7 and 8 occurs at location 16 and the resulting interference is observed at sensor 18.

The invention structure is advantageous in diagnostics and as a manufacturing tool. Its structural simplicity provides usefulness under conditions of stress. It is further relatively insensitive to vibration noise and to uniform motion in both the lateral and longitudinal directions of the workpiece surface. There is sufficient sensitivity that 1 milliwatt of light energy and a 0.1 nm (1 Angstrom) protrusion can be measured. With such sensitivity, the region around the parts can be affected by such environmental influences as air currents so that shielding would be employed where high sensitivity is desired.

The parallel reflecting surface member 3 may be an ordinary mirror. Enhanced sensitivity is achieved by providing partial reflectivity of surface 3 and higher reflectivity at surface 5.

The sensors 17 and 18 may be any semiconductor photodiode.

In accordance with the invention, the coherent light 1 is divided or split into parallel beams using reflections from both surfaces at one location and after being reflected from a workpiece surface the beams are combined at another location using internal reflections from both surfaces to permit surface differences to be translated into optical phase differences.

The difference in optical path length between the beams 6 and 7 and 7 and 8 produced by such surface variations at the workpiece as displacement, reflectivity, bending and rotation is manifested through the combination of the beams by internal reflection from the two parallel surfaces 4 and 5 to provide intensity variations at the sensors 17 and 18 due to constructive and destructive light beam interference.

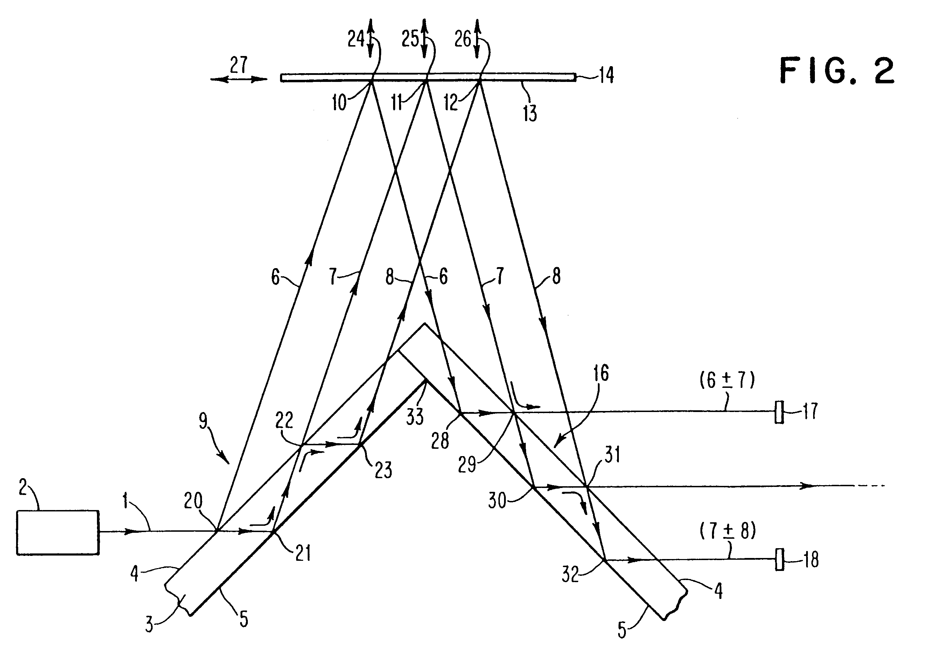

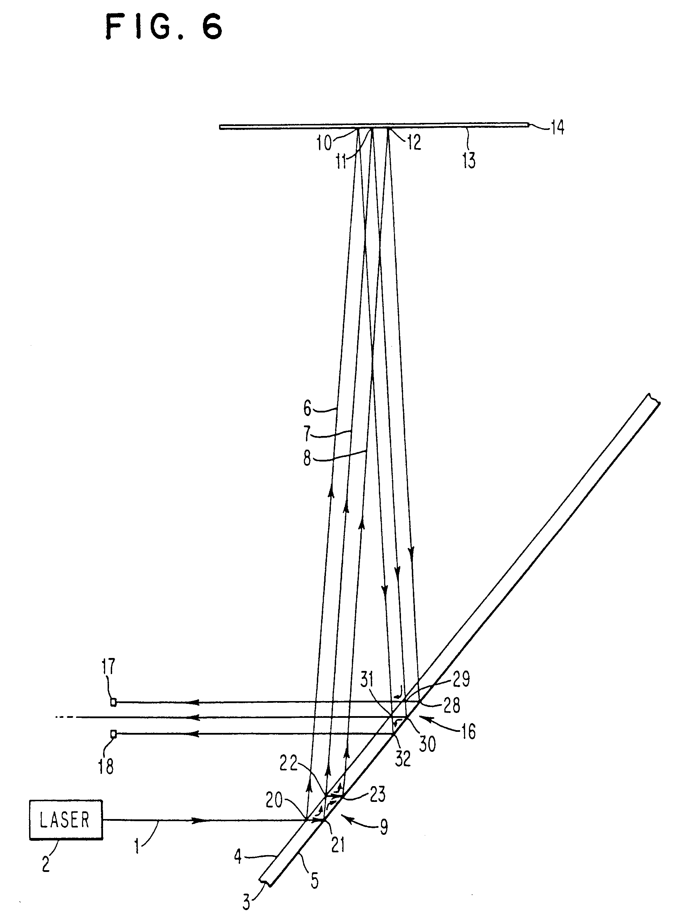

The internal light beam interference in the combining location 16 is illustrated in detail in connection with different structural arrangements in FIGS. 2 and 6.

In FIG. 2, a structural arrangement is provided in which the parallel reflecting surface element 3 is constructed so that the splitting location 9 and the combining location 16 are arranged by divergent source 1 and sensors 17 and 18 positioning. This structural arrangement provides inter-element dimensional flexibility. The divergent positioning is achieved by making the element 3 of two pieces.

Referring to FIG. 2, light 1 from the source 2 strikes the member 3 at the splitting location 9. A portion of the light 1 strikes the front reflecting surface 4 at a location 20. The reflected beam from location 20 is labelled 6. At location 20, the light 1 also continues to the back reflecting surface 5 where it is reflected at location 21. The reflected beam from location 21 is labelled 7 and is parallel to beam 6. A portion of the light reflected at location 21 is reflected from the internal side of the front reflecting surface 4 at location 22 to location 23 at the rear reflecting surface 5 where, upon again being reflected, forms a beam 8 that is parallel to both beams 6 and 7. The coherent light source 1 has thus been split into three parallel beams 6, 7 and 8 and each strikes a separate location 10, 11 and 12, respectively, on the surface 13 of the workpiece 14.

The parallel beams 6, 7 and 8 are reflected still in parallel from the surface 13 of the workpiece 14 at locations 10, 11 and 12. Any variation orthogonal to surface 13 as shown by arrows 24, 25 and 26 of locations 10, 11 and 12 with respect to other locations will change the optical path length relationship of the center beam 7 with respect to either or both outer beams 6 and 8. The invention is insensitive to a variation, as illustrated by arrow 27 in a direction essentially parallel to the surface 13 inasmuch as surface 13 is truly planar since the relative optical path lengths are not affected. It is also insensitive to uniform motion of workpiece 14 parallel to the beams 6, 7 and 8.

The parallel beams 6, 7 and 8, after reflection from locations 10, 11 and 12, strike the member 3 at a second or combining location 16. In the structural arrangement of FIG. 2 to provide the divergent locations, the member 3 is changed in direction at 33 using two orthogonal pieces.

At the combining location 16, the internal reflections between the parallel faces 4 and 5 operate to provide either constructive or destructive interference between the center beam 7 and either or both of the outer beams 6 and 8.

Considering first the outer beam 6, the beam is reflected from the back surface 5 at location 28 to sensor 17. Beam 7 strikes front surface 4 at location 29 where one portion proceeds through member 3 to location 30 where it is reflected from surface 5 to exit from the member 3 and another portion is reflected at location 29 where it constructively or destructively combines with beam 6. Beam 8 enters member 3 at location 31 and is reflected from surface 5 at location 32 to sensor 18. A portion of the light from beam 7 is reflected at the internal surface of 4 at location 31 to combine with beam 8 to provide a constructive or destructive interference with beam 7. The points of combination are shown as curved arrows.

The sensors 17 and 18 detect the phase difference between beams 6 and 7 and 7 and 8, respectively, through the intensity resulting from the interference between each outer beam and the center. The phase difference producing the interference is the result of the path length difference between the beams.

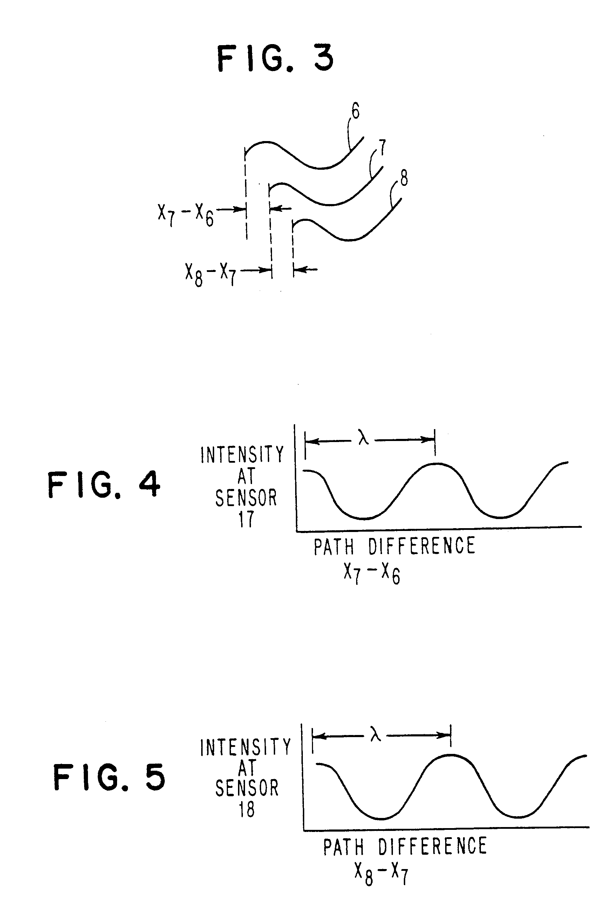

Referring to FIGS. 3, 4 and 5, the sensing of the intensity resulting from the interference is schematically illustrated. In FIG. 3, the phase relationship is illustrated for illustrative different path length situation. The phase offset due to the different path lengths causes the intensity as sensed by a sensor 17 for beams 6 and 7 and 18 for beams 7 and 8 to increase or decrease as the interference is constructive or destructive so that the intensity at the sensor follows the oscillating curves of FIGS. 4 and 5 with a period equal to the optical wavelength $\lambda$. The change in intensity is indicative of displacement, and can be resolved into rotation and bending modes of the workpiece.

The sensor may be a simple photovoltaic device which provides a voltage corresponding to light intensity which in turn is usable in the standard practice in the art to indicate the surface conditions under study, such as setting acceptability limits as is standard in the art.

It will further be apparent to one skilled in the art that within the principle of sensing, the effect of interference between the center and each of the outer beams to detect surface variation, rotation and

3

bending, other sensing instrumentation techniques will be readily apparent.

The presence of element 15 in FIG. 1 can be viewed as a bending type surface variation in that locations 10 and 12 are farther away than location 11 whereas were there to be another displacement element similar to 15 positioned at either location 10 or 12, a rotation type surface variation would be indicated.

It will be apparent to one skilled in the art that in addition to the reflections employed in the invention and discussed in detail, there will be some reflection each time a beam passes through a surface. The effect of these reflections may be minimized by sensor positioning and signal threshold level requirements.

Referring next to FIG. 6, a preferred embodiment is provided in which the parallel reflecting surface member 3 is straight with the splitting location 9 and the combining location 16 merely separated.

In FIGS. 1, 2 and 6, the same reference numerals are employed.

With the structure of this embodiment, the parallel reflecting surface member 3 may be a simple mirror. The structure provides further flexibility in location of individual components.

It will be apparent to one skilled in the art that the apparatus although highly sensitive is constructed of very simple parts. The source 2 of coherent light 1 may be any monochromatic optical source with low beam divergence. A helium neon laser with a wavelength ($\lambda$) of 632.8nm (6328Å) is ideally adapted for this purpose.

The parallel reflecting surface member 3 in splitting and combining can be any mirror with plane parallel surfaces. There is some enhancement in sensitivity if surface 4 is partially reflecting and surface 5 totally reflecting. The surfaces 4 and 5 are separated by about 3 millimeters.

The distance from the locations 9 and 16 to the surface 13 is of the order of 50 to 200 millimeters.

The distance between surface locations 10, 11 and 12 is of the order of 5 millimeters between each location.

The detectors 17 and 18 are silicon photodiodes.

The measurements of rotation, where the optical paths to the two external locations 10 and 12 are such that one is shorter and one is longer than the optical path to location 11, and the measurement of bending, where the optical path to one location, such as 11, is shorter than the optical path to either or both of the other locations 10 and 12 is performed by a simultaneous detection of the phase shifts at 17 and 18, in accordance with the following table.

## TABLE

| Measurement | Displacement of Locations 10, 11 and 12 | Signal at Sensors (Phase Variation) | Sensitivity | |
|---|---|---|---|---|
| | | | $\phi$ | $x$ |
| Rotation | $x(10)+0x(11)-x(12)$ | $\phi(18) + \phi(17)$ | $2 \times 10^{-4}$ | $1 \times 10^{-1}$ |
| Bending | $x(10)-2x(11)+x(12)$ | $\phi(18) - \phi(17)$ | $5 \times 10^{-5}$ | $2.5 \times 10^{-2}$ |

where $x$ is displacement in $0.1$ nm (angstroms)

$\phi$ is phase variation in radians

$k$ is $2\pi/\lambda$

$$\phi(19) = 2k(x(10)-x(11))$$

$$\phi(17) = 2k(x(11)-x(12))$$

$$I(17) = I(17)_0 (1 + \mathrm{Cos}\ \phi(17))$$

$$I(18) = I(18)_0 (1 + \mathrm{Cos}\ \phi(18))$$

$I$ is light intensity at detectors 17 and 18

Thus, for a helium neon laser with $\lambda$ = 632.8 nm (6328Å), a 0.5 nm (5Å) displacement at location 11 would produce $\phi_{18}-\phi_{17}$ = 0.02 radians.

The structure has the advantages that the interfering beams all reflect from different points on the same optical elements which in turn greatly reduces the susceptibility to vibrations. Transverse alignment is dependent only on the splitting and combining locations having parallel surfaces. Thus, a change of mirrors requires no realignment.

What has been described is a displacement interferometer wherein a coherent light beam is reflected from both sides of an ordinary mirror at a splitting location producing three parallel beams which beams in turn are reflected from separate locations on a workpiece back to a combining location where they are directed to two separate sensors. Any difference in displacement of the locations on the surface of the workpiece produces an optical phase shift which may be instrumented to indicate an intensity variation observation so that each sensor provides a measure of the relative displacement of adjacent points on the workpiece.

**Claims**

1. Interferometric surface tester comprising a source of coherent light (2), a beam splitter, reflecting means, a carrier (14) for holding a test object (15) and sensors for measuring reflected light beams, characterized by
first light processing means (9) separating a beam of said coherent light source into two outer beams (6, 8) and one center beam (7), the beams being parallel to each other, and directing them to the surface (13) of a workpiece (14),
second light processing means (16) combining after reflection from said workpiece surface each of the outer beams (6, 8) of said three parallel beams with the center beam (7), and
sensing means (17, 18) being positioned to sense the phase shift between said interfering beams (6, 7 and 7, 8).

2. Interferometric surface tester of claim 1 wherein said first (9) and second (16) light processing means are optically transparent members with parallel faces.

3. Interferometric surface tester of claim 1 wherein both said first (9) and said second (16) light processing means are at separate locations in a single optically transparent member (3) with parallel surfaces (4, 5).

4. Interferometric surface tester of claim 3 wherein said optically transparent member (3) is a mirror.

5. Interferometric surface tester of claim 2 where each said first (9) and said second (16) optically transparent members is a mirror.

6. Interferometric surface tester of claim 1 including means (17, 18) for sensing light intensity in each outer (6, 8) of said three parallel beams (6, 7, 8).

7. Interferometric surface tester of claim 6 wherein said light intensity sensing means (17, 18) is a photodiode.

8. Interferometric surface tester of claim 3 wherein said optically transparent member (3) is a mirror including means (17, 18) for sensing light intensity in each outer (6, 8) of said three parallel beams (6, 7, 8).

9. Interferometric surface tester of claim 2 where each said first (9) and said second (16) optically transparent members is a mirror including means (17, 18) for sensing light intensity in each outer (6, 8) of said three parallel beams (6, 7, 8).

**Patentansprüche**

1. Interferometrisches Oberflächenuntersuchungsgerät, das eine Quelle kohärenten Lichts (2), einen Strahlteiler, reflektierende Mittel, einen Träger (14) für ein Untersuchungsobjekt (15) und Sensoren zur Messung reflektierter Lichtstrahlen enthält, gekennzeichnet durch
erste optische Mittel (9), die einen Strahl der kohärenten Lichtquelle in zwei äußere Strahlen (6, 8) und einen zentralen Strahl (7) teilen, wobei diese Strahlen parallel zueinander verlaufen, und sie auf die Oberfläche (13) eines Werkstücks (14) richten,
zweite optische Mittel (16), die nach Reflexion von der Werkstückoberfläche jeden der beiden äußeren Strahlen (6, 8) der drei parallelen Strahlen mit dem zentralen Strahl (7) überlagern, und
sensorische Mittel (17, 18), die zur Abtastung der Phasenverschiebung zwischen den interferierenden Strahlen (6, 7 und 7, 8) angebracht sind.

2. Interferometrisches Oberflächenuntersuchungsgerät nach Anspruch 1, worin das erste (9) und das zweite (16) optische Mittel optisch durchlässige Bauelemente mit parallelen Flächen sind.

6

3.  Interferometrisches Oberflächenuntersuchungsgerät nach Anspruch 1, worin das erste (9) und das zweite (16) optische Mittel an separaten Orten in einem einzigen optisch durchlässigen Bauelement (3) mit parallelen Oberflächen (4, 5) liegen.

4.  Interferometrisches Oberflächenuntersuchungsgerät nach Anspruch 3, worin das optisch durchlässige Bauelement (3) ein Spiegel ist.

5.  Interferometrisches Oberflächenuntersuchungsgerät nach Anspruch 2, wobei sowohl das erste (9) als auch das zweite (16) optisch durchlässige Bauelement ein Spiegel ist.

6.  Interferometrisches Oberflächenuntersuchungsgerät nach Anspruch 1, das Mittel (17, 18) zur Abtastung der Lichtintensität in den beiden äußeren (6, 8) der drei parallelen Strahlen (6, 7, 8) enthält.

7.  Interferometrisches Oberflächenuntersuchungsgerät nach Anspruch 6, worin das Abtastmittel (17, 18) für die Lichtintensität Photodioden sind.

8.  Interferometrisches Oberflächenuntersuchungsgerät nach Anspruch 3, worin das optisch durchlässige Bauelement (3) ein Spiegel ist und das Mittel (17, 18) zur Abtastung der Lichtintensität in den beiden äußeren (6, 8) der drei parallelen Strahlen (6, 7, 8) enthält.

9.  Interferometrisches Oberflächenuntersuchungsgerät nach Anspruch 2, wobei sowohl das erste (9) als auch das zweite (16) optisch durchlässige Bauelement ein Spiegel ist, und das Mittel (17, 18) zur Abtastung der Lichtintensität in den beiden äußeren (6, 8) der drei parallelen Strahlen (6, 7, 8) enthält.

**Revendications**

1.  Contrôleur interférométrique de surface comprenant une source de lumière cohérente (2), un séparateur de faisceau, des moyens de réflexion, un support (14) pour tenir un objet à contrôler (15), et des capteurs pour mesurer les faisceaux de lumière réfléchie, caractérisé en ce qu'il comprend :
    un premier dispositif de traitement de lumière (9) qui sépare un faisceau de ladite source de lumière cohérente en deux faisceaux extérieurs (6,8) et un faisceau central (7), les faisceaux étant mutuellement parallèles, et qui les dirige vers la surface (13) d'une pièce à contrôler (14),
    un deuxième dispositif de traitement de lumière (16) qui combine, après réflexion par ladite surface de la pièce, chacun des faisceaux extérieurs (6,8) desdits trois faisceaux parallèles avec le faisceau central (7), et
    des moyens de détection (17,18) placés de manière à détecter le déphasage entre lesdits faisceaux en interférence (6,7 et 7,8).

2.  Contrôleur interférométrique de surface suivant la revendication 1, dans lequel lesdits premier (9) et deuxième (16) dispositifs de traitement de lumière sont des éléments optiquement transparents à faces parallèles.

3.  Contrôleur interférométrique de surface suivant la revendication 1, dans lequel lesdits premier (9) et deuxième (16) dispositifs de traitement de lumière sont tous deux prévus, à des endroits distincts, dans un même élément optiquement transparent (3) à surfaces parallèles (4,5).

4.  Contrôleur interférométrique de surface suivant la revendication 3, dans lequel ledit élément optiquement transparent (3) est un miroir.

5.  Contrôleur interférométrique de surface suivant la revendication 2, dans lequel chacun desdits premier (9) et deuxième (16) éléments optiquement transparents est un miroir.

6.  Contrôleur interférométrique de surface suivant la revendication 1, comprenant des moyens (17,18) pour détecter l'intensité de lumière dans chaque faisceau extérieur (6,8) desdits trois faisceaux parallèles (6,7,8).

7.  Contrôleur interférométrique de surface suivant la revendication 6, dans lequel lesdits moyens de détection d'intensité de lumière (17,18) comprennent une photodiode.

**8.** Contrôleur interférométrique de surface suivant la revendication 3, dans lequel ledit élément optiquement transparent (3) est un miroir comportant des moyens (17,18) de détection de l'intensité de lumière de chaque faisceau extérieur (6,8) desdits trois faisceaux parallèles (6,7,8).

**9.** Contrôleur interférométrique de surface suivant la revendication 2, dans lequel chacun desdits premier (9) et deuxième (16) éléments optiquement transparents est un miroir comportant des moyens (17,18) de détection de l'intensité de lumière de chaque faisceau extérieur (6,8) desdits trois faisceaux parallèles (6,7,8).

# FIG. 1

FIG. 2

# FIG. 3

# FIG. 4

# FIG. 5

# FIG. 6